(19) Europäisches Patentamt European Patent Office Office européen des brevets

(11) **EP 4 184 007 B1**

(12) **EUROPEAN PATENT SPECIFICATION**

(45) Date of publication and mention
of the grant of the patent:
**19.03.2025  Bulletin 2025/12**

(21) Application number: **21841719.4**

(22) Date of filing: **13.05.2021**

(51) International Patent Classification (IPC):
**F03D 17/00** *(2016.01)*

(52) Cooperative Patent Classification (CPC):
**F03D 17/00; F03D 17/0065; F03D 17/018;**
F05B 2240/50; F05B 2270/303; F05B 2270/325;
F05B 2270/707; Y02E 10/72

(86) International application number:
**PCT/CN2021/093632**

(87) International publication number:
**WO 2022/012137 (20.01.2022 Gazette 2022/03)**

(54) **METHOD AND SYSTEM FOR MONITORING WIND TURBINE GENERATOR SET, AND
COMPUTER-READABLE STORAGE MEDIUM**

VERFAHREN UND SYSTEM ZUR ÜBERWACHUNG EINES WINDTURBINENGENERATORSATZES
UND COMPUTERLESBARES SPEICHERMEDIUM

PROCÉDÉ ET SYSTÈME DE SURVEILLANCE D'UN ENSEMBLE GÉNÉRATEUR DE TURBINE
ÉOLIENNE, ET SUPPORT DE STOCKAGE LISIBLE PAR ORDINATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **15.07.2020   CN 202010682155**

(43) Date of publication of application:
**24.05.2023   Bulletin 2023/21**

(73) Proprietor: **SHANGHAI ELECTRIC WIND POWER
GROUP CO., LTD
Shanghai 200241 (CN)**

(72) Inventors:
 • **CHENG, Xiaobin**
   **Shanghai 200241 (CN)**
 • **XU, Yiqing**
   **Shanghai 200241 (CN)**
 • **ZHAO, Dawen**
   **Shanghai 200241 (CN)**

(74) Representative: **Dai, Simin**
   **Reyda IP
   A073
   157, Quai du Président Roosevelt
   92130 Issy-les-Moulineaux (FR)**

(56) References cited:
| | |
|---|---|
| EP-B1- 2 927 662 | CN-A- 102 808 743 |
| CN-A- 105 804 951 | CN-A- 109 386 435 |
| CN-A- 110 414 155 | CN-A- 111 878 320 |
| DE-A1- 102016 215 614 | US-A1- 2010 138 267 |
| US-A1- 2019 145 382 | US-B2- 10 151 301 |

**Description**

**TECHNICAL FIELD**

The present disclosure relates to the field of wind turbines, in particular to a method and system for monitoring a wind turbine generator system, and a computer readable storage medium.

**BACKGROUND**

With the progress of the times and the improvement of people's awareness of environmental protection, the development and utilization of renewable and clean energy has attracted more and more attention from the international community. As one of the new energy sources with the most mature technology and the potential for large-scale commercial development in the world, wind energy has the characteristics of abundant reserves, renewability, wide distribution and no pollution, and has the value of large-scale development and utilization. As a kind of clean energy with abundant reserves, renewable and zero emission, wind power generation technology has become an important field that countries are competing for, and has been promoted to the height of national strategy.

Real-time data collection, monitoring and related data analysis are performed on key positions such as an impeller, a gear box, a generator, a yaw and pitch mechanism of a wind turbine generator system through sensors such as temperature sensors, rotation speed sensors and vibration sensors by using a condition monitoring technology of the wind turbine generator system, so as to know the operating health status of the wind turbine generator system, find fault symptoms in time, deal with related faults in advance and make reasonable arrangements for power generation operation, thereby improving operational efficiency, reducing operation and maintenance costs and maximizing benefits. EP 2 927 662 B1 and US 2019/145382 A1 disclose a method for monitoring a wind turbine generator system according to the prior art.

Wind turbine generator systems work in different environments, due to the influence of environmental factors, a component temperature reflects different conditions. In the related art, the influence of environmental factors on the component temperature of the wind turbine generator system cannot be effectively monitored, thereby reducing the accuracy of the monitoring, easily causing false alarms, and increasing operation and maintenance costs.

**SUMMARY**

The present invention provides a method and system for monitoring a wind turbine generator system, and a computer readable storage medium.

According to a first aspect of embodiments of the present invention, there is provided a method for monitoring a wind turbine generator system, including: obtaining internal environmental temperature data, external environmental temperature data and component temperature data of the wind turbine generator system; determining one or more first statistics according to a difference between the component temperature data and the internal environmental temperature data, and determining one or more second statistics according to a difference between the component temperature data and the external environmental temperature data; and determining whether the component temperature data meets a set requirement according to the first statistics and the second statistics.

In a particular embodiment, determining whether the component temperature data meets the set requirement according to the first statistics and the second statistics further includes: performing a test and analysis on the first statistics and the second statistics by using a multivariate test method to determine one or more test values between the first statistics and the second statistics and an upper limit value of the test values, wherein the multivariate test method comprises a Hotelling's T-squared distribution test method; and monitoring whether the test values exceed the upper limit value to determine whether the component temperature data meets the set requirement.

In an example, the multivariate test method includes a Hotelling's T-squared distribution test method, and performing the test and analysis on the first statistics and the second statistics by using the multivariate test method further includes: performing the test and analysis on the first statistics and the second statistics by using the Hotelling's T-squared distribution test method.

In a particular embodiment, obtaining the internal environmental temperature data, the external environmental temperature data and the component temperature data of the wind turbine generator system includes: obtaining a set number of the internal environmental temperature data, the external environmental temperature data and the component temperature data. Performing the test and analysis on the first statistics and the second statistics by using the multivariate test method to determine one or more test values between the first statistics and the second statistics and the upper limit value of the test values further includes: determining the test values between the first statistics and the second statistics according to the first statistics, the second statistics, an average value of the set number of the first statistics and an average value of the set number of the second statistics; and determining the upper limit value by using a chi-square distribution method according to the set number and a number of statistics determined from the internal environmental temperature data, the external environmental temperature data and the component temperature data and the set number.

In a particular embodiment, monitoring whether the test values exceed the upper limit value to determine whether the component temperature data meets the set requirement further includes at least one of the following steps: in response to continuously monitoring that a first set number of the test values are greater than the upper limit value, determining that the component temperature data does not meet the set requirement;

in response to continuously monitoring that a second set number of the test values are less than or equal to the upper limit value, determining that the component temperature data meets the set requirement.

In an example, the component temperature data includes bearing temperature.

In a particular embodiment, a supervisory control and data acquisition (SCADA) data set of the wind turbine generator system is collected by a SCADA system, and obtaining the internal environmental temperature data, the external environmental temperature data and the component temperature data of the wind turbine generator system includes: obtaining at least part of data with a set time dimension in the SCADA data set as a to-be-processed data set, wherein the to-be-processed data set includes a plurality of data groups, and each of the plurality of data groups includes a plurality of data types representing different information at a same moment, and the plurality of data types include to-be-processed internal environmental temperature data, to-be-processed external environmental temperature data and to-be-processed component temperature data; performing a data filtering on the to-be-processed data set through one or more data filtering steps to obtain a filtered data set, wherein the filtered data set includes the internal environmental temperature data, the external environmental temperature data and the component temperature data; and obtaining the internal environmental temperature data, the external environmental temperature data and the component temperature data from the filtered data set.

In an exmaple, obtaining at least part of data in the SCADA data set as the to-be-processed data set includes: obtaining at least part of data with a set time dimension in the SCADA data set as the to-be-processed data set.

In a particular embodiment, the data filtering steps include: dividing data in the to-be-processed data set into a plurality of clusters by using a clustering algorithm, wherein the clustering algorithm comprises a fuzzy C-means clustering algorithm; and removing one or more singular values in each of the plurality of clusters and other data in a data group including the singular values.

In an exmaple, the clustering algorithm includes a fuzzy C-means clustering algorithm, and and dividing the data in the to-be-processed data set into the plurality of clusters by using the clustering algorithm includes: dividing the data in the to-be-processed data set into the plurality of clusters by using the fuzzy C-means clustering algorithm.

In a particular embodiment, removing one or more singular values in each of the plurality of clusters and other data in the data group including the singular values includes: determining a center of the cluster by using the fuzzy C-means clustering algorithm; determining respective Euclidean distances between data in one or more of the clusters with centers of corresponding clusters; and removing one or more distance outliers from the Euclidean distances of the clusters based on Pauta criterion, and removing one or more singular values corresponding to the distance outliers.

In a particular embodiment, the data filtering steps include: determining abnormal data in the to-be-processed data set by using a quartile method; and removing the abnormal data and other data in a data group including the abnormal data.

In a particular embodiment, before dividing the data in the to-be-processed data set into the plurality of clusters by using the clustering algorithm, the method further includes: performing standardization processing on the data in the to-be-processed data set to obtain standardized data. Dividing the data in the to-be-processed data set into the plurality of clusters by using the clustering algorithm includes: dividing the standardized data into the plurality of clusters by using the clustering algorithm;

after removing one or more singular values in each of the plurality of clusters and other data in the data group including the singular values, the method further includes: performing reverse standardization processing on the standardized data obtained after removing one or more singular values in the cluster and other data in the data group including the singular values.

In a particular embodiment, dividing the data in the to-be-processed data set into the plurality of clusters by using the clustering algorithm includes: dividing each type of the data in the to-be-processed data set into a plurality of clusters respectively by using the clustering algorithm.

In a particular embodiment, after performing the data filtering on the to-be-processed data set, the method further includes: in response to that data in the filtered data set is discontinuous in time series, backfilling data for one or more missing moments between discontinuous data in the time series.

In a particular embodiment, backfilling the data for one or more missing moments between discontinuous data in the time series includes: in response to that a number of continuous data blocks before the discontinuous data in the time series is greater than 2, determining a residual mean and a variance of the continuous data blocks before the discontinuous data in the time series; and generating a random number based on the residual mean and the variance as the data for the missing moments.

In a particular embodiment, backfilling the data for one or more missing moments between discontinuous data in the time series includes: in response to that a number of continuous data blocks before the discontinuous data in the time series is less than or equal to 2, selecting data corresponding to a moment before the discontinuous data in the time series as the data for the missing moments.

According to a second aspect of the embodiments of the present disclosure, there is provided a system for monitoring a wind turbine generator system, including one or more processors for implementing the method for monitoring the wind turbine generator system described in any one of the above embodiments.

According to a third aspect of the embodiments of the present disclosure, there is provided a computer readable storage medium storing a computer program thereon, where when the computer program is executed by one or more processors, the method for monitoring the wind turbine generator system described in any one of the above embodiments is implemented.

According to technical solutions provided by the embodiments of the present disclosure, two variables are established based on the environmental temperature and the component temperature of the wind turbine generator system, and it is determined whether the component temperature meets the set requirement according to the two variables, the reduction of the accuracy of the monitoring caused by the influence of environmental factors on the component temperature of the wind turbine generator system can be reduced, thereby improving the accuracy of determining the running health state of the wind turbine generator system based on the component temperature.

It should be understood that the above general descriptions and subsequent detailed descriptions are merely illustrative and explanatory, and shall not constitute limitation to the present disclosure.

## BRIEF DESCRIPTION OF THE DRAWINGS

The accompanying drawings, which are incorporated in and constitute a part of this specification, illustrate examples consistent with the present disclosure and, together with the description, serve to explain the principles of the disclosure.

FIG. 1 is a flowchart illustrating a method for monitoring a wind turbine generator system according to an exemplary embodiment of the present disclosure.

FIG. 2 and FIG. 3 are partial detailed flowcharts illustrating the method for monitoring the wind turbine generator system shown in FIG. 1.

FIG. 4 is a flowchart illustrating a method for processing data according to an exemplary embodiment of the present disclosure.

FIG. 5 is a flowchart illustrating a data filtering step in a method for processing data according to an exemplary embodiment of the present disclosure.

FIG. 6 is a partial detailed flowchart illustrating the data filtering step shown in FIG. 5.

FIG. 7 is a flowchart illustrating a data filtering step in a method for processing data according to an exemplary embodiment of the present disclosure.

FIG. 8 is a block diagram illustrating a system for monitoring a wind turbine generator system according to an exemplary embodiment of the present disclosure.

## DETAILED DESCRIPTION OF THE EMBODIMENTS

Exemplary embodiments will be described in detail here, examples of which are illustrated in the accompanying drawings. When the following description refers to the drawings, unless otherwise indicated, the same numerals in different drawings indicate the same or similar elements. The implementations set forth in the following description of exemplary embodiments do not represent all implementations consistent with the embodiments of the present disclosure. Instead, they are merely examples of apparatuses and methods consistent with aspects related to the embodiments of the present disclosure as recited in the appended claims.

Terms used in the embodiments of the present disclosure are only adopted for the purpose of describing specific embodiments and not intended to limit the embodiments of the present disclosure. The singular forms "a", "one" and "the" used in the present disclosure and the appended claims are also intended to include plural forms, unless the context clearly indicates other meanings. It should also be understood that the term "and/or" as used in the present disclosure refers to and includes any and all possible combinations of one or more of the associated listed items.

It should be understood that, although terms first, second, third and the like may be adopted to describe various information in the embodiments of the present disclosure, the information should not be limited to these terms. These terms are only used to distinguish the same type of information. For example, first information may also be referred to as second information, and similarly, the second information may also be referred to as the first information without departing from the scope of the embodiments of the present disclosure. For example, a term "if" used herein may be explained as "while" or "when" or "in response to determining", which depends on the context.

Wind turbine generator systems work in different environments, due to the influence of environmental factors, a component temperature reflects different conditions. Taking a bearing temperature as an example, the environment in which the turbine generator systems are located in summer and winter is different. Assuming that an alarm line of the bearing temperature is 80°, since an outdoor temperature is relatively high in summer, it can be regarded as a normal state that the bearing temperature is about 60° all the year round. However, if the bearing temperature is still 60° in winter, even though there is still a certain gap from the alarm line of 80°, it is necessary to pay attention to the temperature. In the related art, the influence of environmental factors on the component temperature of the wind turbine generator system cannot be effectively monitored, thereby reducing the accuracy of the monitoring, easily causing false alarms, and increasing operation and maintenance costs.

The present disclosure provides a method and system for monitoring a wind turbine generator system, and a computer readable storage medium, which can reduce the reduction of the accuracy of the monitoring caused by the influence of environmental factors on the component temperature of the wind turbine generator system, thereby improving the accuracy of determining the running health state of the wind turbine generator system based on the component temperature. The method and system for monitoring the wind turbine generator system, and the computer readable storage medium of the present disclosure will be described in detail below with reference to the accompanying drawings. In the case of no conflict, the features in the following embodiments and implementations may be combined with each other.

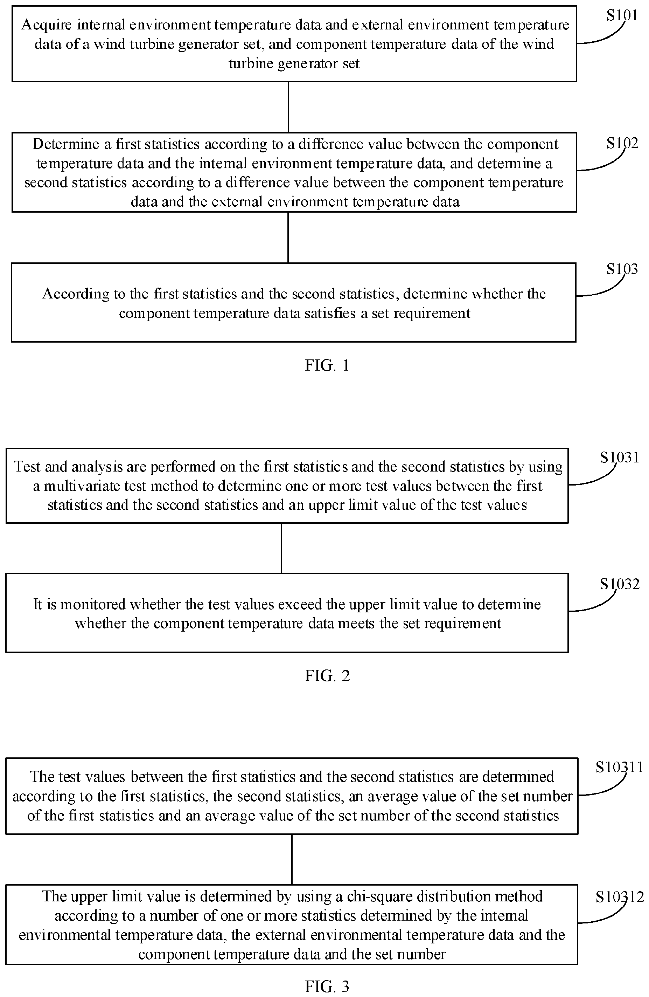

As shown in FIG. 1, the embodiment of the present disclosure provides a method for monitoring a wind turbine generator system, including the following steps S101-S103.

Step S101, internal environmental temperature data, external environmental temperature data and component temperature data of the wind turbine generator system are obtained. Optionally, the component can be a bearing of the wind turbine generator system, and the component temperature data can include a bearing temperature. The component can also be other components, for example, a gearbox; and the component temperature data can include, for example, an oil temperature of the gearbox, which will not be limited by the present disclosure.

The internal environmental temperature data can refer to an internal environmental temperature of a nacelle of the wind turbine generator system, and the external environmental temperature data can refer to an external environmental temperature of the nacelle of the wind turbine generator system. The internal environmental temperature data and the external environmental temperature data of the wind turbine generator system and the component temperature data of the wind turbine generator system can be obtained by setting temperature sensors inside and outside the nacelle of the wind turbine generator system respectively and setting temperature sensors on components of the wind turbine generator system.

Step S102, one or more first statistics are determined according to a difference between the component temperature data and the internal environmental temperature data, and one or more second statistics are determined according to a difference between the component temperature data and the external environmental temperature data.

New variables such as a first statistic $t_1$ and a second statistic $t_2$ can be established by using the following formulas (1) and (2) based on the internal environmental temperature data, the external environmental temperature data and the component temperature data of the wind turbine generator system:

$$t_1 = t_b - t_{out} \quad (1);$$

$$t_2 = t_b - t_{in} \quad (2);$$

where $t_b$ represents the component temperature, for example, the bearing temperature; $t_{out}$ represents the external environmental temperature of the wind turbine generator system, and $t_{in}$ represents the internal environmental temperature of the wind turbine generator system.

Step S103, it is determined whether the component temperature data meets a set requirement according to the first statistics and the second statistics.

According to the embodiment of the present disclosure, two variables are established based on the environmental temperature and the component temperature of the wind turbine generator system, and it is determined whether the component temperature meets the set requirement according to the two variables, the reduction of the accuracy of the monitoring caused by the influence of environmental factors on the component temperature of the wind turbine generator system under variable operating conditions can be reduced, thereby improving the accuracy of determining the running health state of the wind turbine generator system based on the component temperature.

As shown in FIG. 2, in some optional embodiments, the step S103 of determining whether the component temperature data meets the set requirement according to the first statistics and the second statistics can further include the following substeps S1031-S1032.

Step S1031, a test and analysis are performed on the first statistics and the second statistics by using a multivariate test method to determine one or more test values between the first statistics and the second statistics and an upper limit value of the test values.

It should be noted that the two monitored variables, the first statistic and the second statistic, are essentially in the field of residuals. According to reasonable assumptions, it can be assumed that a distribution of the two variables conforms to a normal distribution. Therefore, the two variables can be tested, analyzed and monitored by using a multivariate test method based on excellent and controllable properties, thereby improving the accuracy of the monitoring and analysis.

Step S1032, it is monitored whether the test values exceed the upper limit value to determine whether the component temperature data meets the set requirement.

Through the above method, the present disclosure can establish two variables for the test and analysis based on the environmental temperature and the component temperature of the wind turbine generator system, perform the test and analysis on the two variables by using the multivariate test method, and determine whether the component temperature data meets the set requirement by comparing the test values and the upper limit value obtained from the test and analysis, therefore, the reduction of the accuracy of the monitoring caused by the influence of environmental factors on the component temperature of the wind turbine generator system under variable operating conditions can be reduced, and the accuracy of determining the running health state of the wind turbine generator system based on the component temperature can be improved.

In some optional embodiments, the multivariate test method includes a Hotelling's T-squared (i.e., Hotelling $T^2$) distribution test method. In step S1031, performing the test and analysis on the first statistics and the second statistics by using the multivariate test can further include performing the test and analysis on the first statistics and the second statistics by using the Hotelling's T-squared distribution test method. It should be noted that, in other examples, the multivariate test method can also include other test methods, as long as two data samples can be combined for analysis, which will not be limited by the present disclosure.

It can be understood that two variables related to the bearing temperature can be established based on the environmental temperature and the component temperature of the wind turbine generator system, and the above two variables can be combined by using the Hotelling's T-squared distribution test method to obtain a variable structure control chart for the test and analysis, therefore, the influence of the environmental temperature on the component temperature of the wind turbine generator system can also be taken into account for analysis, thereby improving the accuracy of determining the running health state of the wind turbine generator system based on the component temperature.

In some optional embodiments, in step S101, obtaining the internal environmental temperature data and the external environmental temperature data of the wind turbine generator system and the component temperature data of the wind turbine generator system can include obtaining a set number of the internal environmental temperature data, the external environmental temperature data and the component temperature data. Since the number of collected temperature data is divided according to a time interval, the component temperature can be controlled and monitored by dividing the time interval, thereby reducing the data error caused by excessive data volume, and improving the accuracy of the monitoring.

As shown in FIG. 3, the step S1031 of performing the test and analysis on the first statistics and the second statistics by using the multivariate test method to determine one or more test values between the first statistics and the second statistics and the upper limit value of the test values can include the following substeps S10311-S10312.

Step S10311, the test values between the first statistics and the second statistics are determined by using the following formula (3) according to the first statistics, the second statistics, an average value of the set number of the first statistics and an average value of the set number of the second statistics:

$$T^2 = \left(x - \overline{x}\right)' S^{-1} \left(x - \overline{x}\right) \qquad (3);$$

where $T^2$ represents the test values, x represents a numerical value of the first statistics and a numerical value of the second statistics, $\overline{x}$ represents the average value of the set number of the first statistics and the average value of the set number of the second statistics, and $S^{-1}$ represents an inverse of a covariance matrix of the first statistic $t_1$ and the second statistic $t_2$.

Step S10312, the upper limit value is determined by using a chi-square distribution method and the following formulas (4) and (5) according to a number of one or more statistics determined by the internal environmental temperature data, the external environmental temperature data and the component temperature data and the set number:

$$UCL = \frac{p(m+1)(m-1)}{m^2 - mp} F_{a,p,m-p} \qquad (4);$$

$$LCL=0 \qquad (5);$$

where UCL represents the upper limit value, LCL represents a lower limit value, p represents a number of variables used for the test and analysis, m represents an order of magnitude of an initial value used as a healthy state (in-control), F means that this formula belongs to the chi-square distribution, and a represents the upper site of the chi-square distribution.

In this embodiment, the variables used for the test and analysis are the first statistic and the second statistic, that is, p=2. The value of m is 1000, that is, the set numbers of the first statistic and the second statistic are both 1000, and then m-p=998. The value of a is 0.001, and then a value of $F_{a,p,m-p}$ can be obtained according to the chi-square distribution. Certainly, in other examples, the value of m can be set according to actual situations, and the present disclosure is not limited to this.

It can be understood that, assuming that the value of m is 2, the values [t1,t2] of the first statistics and the second statistics are [1,10] and [3,30], and then $\bar{x}$ =([1,10]+[3,30])/2=[2,20], and ($x - \bar{x}$) are [1,10]-[2,20]=[-1,-10] and [3,30]-[2,20]= [1,10], respectively.

In general, supervisory control and data acquisition (SCADA) data of the wind turbine generator system can be collected by a SCADA system, and can include monitoring data such as temperature, wind speed and power representing the performance of the wind turbine generator system. The internal environmental temperature data and the external environmental temperature data of the wind turbine generator system and the component temperature data of the wind turbine generator system also belong to one type of data in the SCADA data. The SCADA system, namely the supervisory control and data acquisition system, can monitor and control wind turbines on site to realize various functions such as data acquisition, equipment control, measurement, parameter adjustment, various signal alarms, display them to users in appropriate forms such as sound, graphics, images, and finally achieve the effect of real-time perception of various parameter states of equipment.

By using the above multivariate test method to perform the test and analysis on the two variables, the test values and the upper limit value can be obtained based on the two variables. However, it is easy to cause fluctuation due to slow-changing characteristics of the SCADA data itself. It can be understood that one or two data values currently monitored exceed a standard index line, but many subsequent data values meet the standard index line (that is, an alarm point), which will cause so-called false alarms. In order to reduce such situations, in the above step S1032, an alarm mode of a "lag" rule can be used, that is, it is monitored whether the test values exceed the upper limit value to determine whether the component temperature data meets the set requirement, in response to continuously monitoring that a first set number of the test values is greater than the upper limit value, it is determined that the component temperature data does not meet the set requirement, which can be considered as exceeding the alarm point.

Optionally, the first set number is 5. A counter and an alarm can be set in the wind turbine generator system. It can be understood that, when the test values obtained by the above multivariate test method based on the currently collected temperature data exceed the upper limit value, the counter starts to count N=N+1, where N is a number of test values exceeding the upper limit value. When N≥5, that is, when five test values continuously monitored are greater than the upper limit value, an alarm signal is sent out through the alarm. By using the above alarm mode of the "lag" rule, the false alarms can be reduced, the accuracy of the alarm can be improved, and the operation and maintenance costs can be reduced.

Further, returning to FIG. 2, in step S1032, it is monitored whether the test values exceed the upper limit value to determine whether the component temperature data meets the set requirement, in response to continuously monitoring that a second set number of the test values is less than or equal to the upper limit value, it is determined that the component temperature data meets the set requirement, which can be considered as not exceeding the alarm point.

Optionally, the second set number is 50. After the alarm sends out an alarm signal, the counter starts to reset. It can be understood that, after the alarm sends out the alarm signal, if 50 test values monitored continuously are not greater than the upper limit value, it means that all the component temperature data monitored during this time interval meets the set requirement. At this time, the counter can be reset to restart the next round of monitoring. Through the above method, the accuracy of the monitoring can be effectively improved, the false alarms can be reduced, the accuracy of the alarm can be improved and the operation and maintenance costs can be reduced.

In some optional embodiments, in order to improve the quality of collected temperature data and the accuracy of the test and analysis, the present disclosure can provide a method for processing data. The method can be used to perform data preprocessing on the SCADA data to remove abnormal temperature data and bad temperature data in the SCADA data.

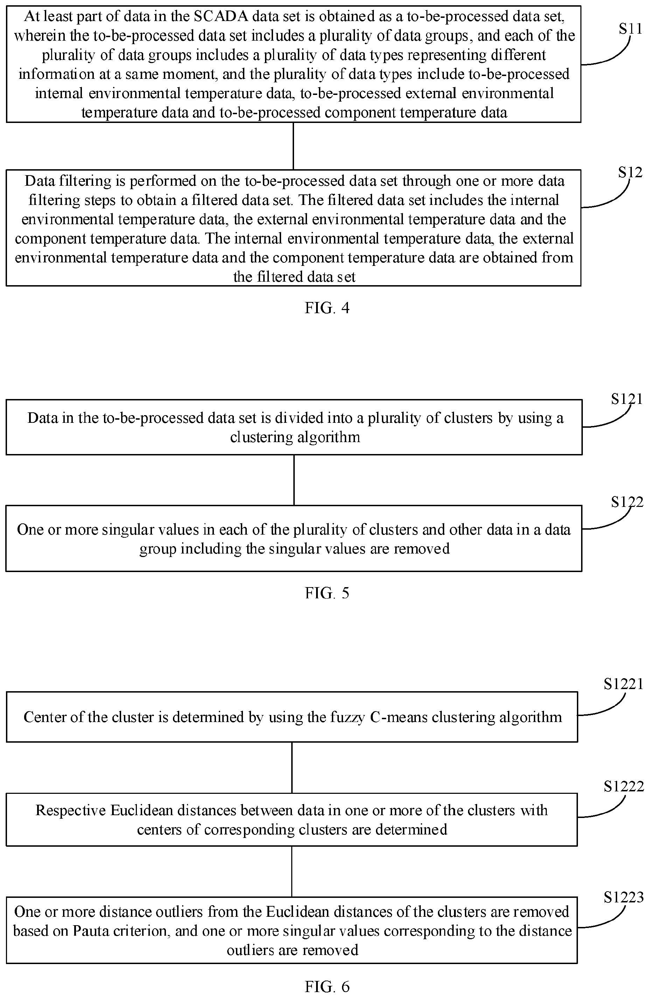

As shown in FIG. 4, the method for processing data can be used to process a SCADA data set of the wind turbine generator system collected by a SCADA system. The method includes the following steps S11-S12.

Step S11, at least part of data in the SCADA data set is obtained as a to-be-processed data set, wherein the to-be-processed data set includes a plurality of data groups, and each of the plurality of data groups includes a plurality of data types representing different information at a same moment, and the plurality of data types include to-be-processed internal environmental temperature data, to-be-processed external environmental temperature data and to-be-processed component temperature data. It can be understood that the SCADA data can include monitoring data such as temperature, wind speed and power. The internal environmental temperature data and the external environmental temperature data of the wind turbine generator system and the component temperature data of the wind turbine generator system also belong to one type of data in the SCADA data. All the above data collected by the SCADA system at the same moment can be divided into the same data group. The SCADA system, namely the supervisory control and data acquisition system, can monitor and control wind turbines on site to realize various functions such as data acquisition, equipment control, measurement, parameter adjustment, various signal alarms, display them to users in appropriate forms such as sound, graphics, images, and finally achieve the effect of real-time perception of various parameter states of equipment.

Step S12, a data filtering is performed on the to-be-processed data set through one or more data filtering steps to obtain a filtered data set (which can be understood as a processed data set). The filtered data set includes the internal environmental temperature data, the external environmental temperature data and the component temperature data. The internal environmental temperature data, the external environmental temperature data and the component temperature data are obtained from the filtered data set.

As shown in FIG. 5, the data filtering steps include a clustering filtering step, and the clustering filtering step includes the following steps S121-S122.

Step S121, data in the to-be-processed data set is divided into a plurality of clusters by using a clustering algorithm. The clustering algorithm, also referred to as cluster analysis, is a statistical analysis method for studying (samples or indexes) classification problems and also an important algorithm for data mining. In addition, the clustering algorithm has advantages of fast speed, simple calculation and high analysis accuracy. In this embodiment, by using the clustering algorithm to divide each type of data in the to-be-processed data set into the plurality of clusters, the accuracy of data processing can be improved, and the quality of the SCADA data can be further improved.

Step S122, one or more singular values in each of the plurality of clusters and other data in a data group including the singular values are removed. Hereinafter, the data filtering steps can be referred to as a clustering filtering step.

By using the clustering algorithm to classify the SCADA data, and then performing data filtering on the classified data to remove one or more singular values and other data at the same moment including the singular values in the SCADA data, the data with relatively poor quality in the SCADA data can be reduced, thereby improving the quality of the SCADA data. By obtaining the internal environmental temperature data, the external environmental temperature data and the component temperature data from the filtered data set obtained after the data filtering steps, abnormal temperature data and bad temperature data in the SCADA data can be removed, thereby improving the quality of the collected temperature data and the accuracy of the test and analysis.

In some optional embodiments, the clustering algorithm includes a fuzzy C-means clustering algorithm. In step S121, dividing the data in the to-be-processed data set into the plurality of clusters by using the clustering algorithm includes: dividing the data in the to-be-processed data set into the plurality of clusters by using the fuzzy C-means clustering algorithm. The fuzzy C-means clustering algorithm is a data clustering method based on the optimization of objective function. The algorithm is an unsupervised fuzzy clustering method, and there is no need for human intervention in the implementation of the algorithm. At the same time, due to the addition of fuzzy technology, the same SCADA data does not belong to a single classification, but may belong to several classifications at the same time. Therefore, this algorithm is suitable for the diversity of the SCADA data of the wind turbine generator system.

It can be understood that, by using the fuzzy C-means clustering algorithm to perform clustering and division processing on the data in the to-be-processed data set, and then removing the singular value in each cluster and other data in the data group including the singular value (that is, other data including the singular value at the same moment), the fluctuation of the SCADA data can be reduced, thereby improving the quality of the SCADA data.

As shown in FIG. 6, in some optional embodiments, in step S122, removing one or more singular values in each of the plurality of clusters and other data in the data group including the singular values includes the following substeps S1221-S1223.

Step S1221, a center of the cluster is determined by using the fuzzy C-means clustering algorithm.

The SCADA data obtained above is represented by a given data set $X=\{X_1, X_2, ..., X_n\}$, a number of clusters is k, $m_j (j=1, 2, ..., k)$ represents a center of each cluster of the clusters, $\mu_j(X_i)$ represents a membership function of the J class corresponding to the $i^{th}$ sample, representing a weight matrix (which can be understood as a weight), and then a clustering loss function based on the membership function can be seen in the following formula (6):

$$J_f = \sum_{j=1}^{k} \sum_{i=1}^{n} \left[ \mu_j \left( X_i \right) \right]^b \left\| X_i - m_j \right\|^2 \tag{6};$$

$$\sum_{j=1}^{k} \mu_j(X_i) = 1$$

where $\quad$ represents a probability that a certain data belongs to the center of each cluster, and a sum of these probabilities is equal to 1; b represents a weighted index, also referred to as a smoothing factor, which controls a sharing degree of patterns among fuzzy classes. In general, the value of b is 2.

Let a partial derivative of $J_f$ to $m_j$ and $\mu_j(X_i)$ be 0, and obtain the necessary condition for a minimum value of formula (6). Referring to the following formulas (7) and (8):

$$m_j = \frac{\sum_{i=1}^{n} \left[ \mu_j(X_i) \right]^b X_i}{\sum_{i=1}^{n} \left[ \mu_j(X_i) \right]^b} \qquad (7);$$

$$\mu_j(X_i) = \frac{\left\| X_i - m_j \right\|^{-2/(b-1)}}{\sum_{s=1}^{k} \left\| X_i - m_s \right\|^{-2/(b-1)}} \qquad (8).$$

Formulas 7 and 8 are solved by an iterative method until a convergence condition is met, and then an optimal solution is obtained.

In some embodiments, values of centers of a group of clusters can be randomly given first, and then formula 7 and formula 8 can be solved by the iterative method until the convergence condition is met, therefore, the optimal solution can be obtained. Alternatively, values of a group of weight matrices can be randomly given first, and then formula 7 and formula 8 can be solved by the iterative method until the convergence condition is met, therefore, the optimal solution can be obtained.

In this embodiment, it is assumed that there are 10 classifications in the algorithm, that is, k=10; and then center points of the 10 classifications (i.e., m1, m2, ..., m10) can be finally obtained through the above method. $X_1, X_2, ..., X_{10}$ represent SCADA data obtained at different times when training with the algorithm. $\mu$ represents the weight, for example, $\mu_5(X_3)$=0.8 indicates that the weight of $X_3$ data belonging to the 5th classification group is 0.8. It should be noted that, in general, the weight is in a range of (0, 1); and the larger the weight, the closer the data belongs to the corresponding classification group. $J_f$ is an objective, that is, the objective function of algorithm iteration. In this embodiment, taking a group of initial weight matrices are randomly given as an example, and the sum of the weights is 1, which means that the sum of probabilities that each data belongs to the center of each cluster is equal to 1. Each center point m is obtained by formula 7 according to the initial weight matrices, and then the weight $\mu$ is obtained by formula 8 according to the obtained center point m, and the iterative calculation is carried out until the convergence condition is met.

Step S1222, respective Euclidean distances between data in one or more of the clusters with centers of corresponding clusters are determined.

Through the above method, multiple centers (for example, 10) can be obtained by the fuzzy C-means clustering algorithm, and each of the SCADA data will be grouped according to rules of the fuzzy C-means clustering algorithm. A Euclidean distance between data in one or more clusters with the center of the corresponding cluster can be determined. In this embodiment, the Euclidean distance between the data in each cluster and the center of the corresponding cluster can be determined. A mean and a mean squared deviation of the Euclidean distance between data in all clusters with the center of the corresponding cluster can be determined. For example, the mean and the mean squared deviation of the Euclidean distance between the data in all 10 clusters with the center of the corresponding cluster can be determined.

Step S1223, one or more distance outliers from the Euclidean distances of the clusters are removed based on Pauta criterion, and one or more singular values corresponding to the distance outliers are removed.

The Pauta criterion is also referred to as 3-sigma criterion. Since the mean and the mean squared deviation of the Euclidean distance between the data in each cluster and the center of the corresponding cluster conform to the normal distribution, the mean and the mean squared deviation of the Euclidean distance between the data in each cluster and the center of the corresponding cluster can usually be divided into three intervals based on the Pauta criterion, wherein data in a second interval can be understood as meeting the requirement, and data in a first interval and a third interval can be understood as not meeting the requirement, wherein the second interval is located between the first interval and the third interval. In this embodiment, by determining SCADA data corresponding to a mean and a mean squared deviation in the first interval (which can be understood as a range not exceeding the lower limit value) and the SCADA data corresponding to a mean and a mean squared deviation in the third interval (which can be understood as a range above the upper limit value) as distance outliers, and then removing singular values corresponding to the distance outliers and other data including the singular values at the same moment in the SCADA data, the data deviation, noise and singular points can be removed, and the fluctuation of the SCADA data can be reduced, thereby improving the quality of the SCADA data and the accuracy of data analysis. Optionally, a percentage of the second interval is 68.27%, and the percentages of the first interval and the third interval are both 15.865%.

In some optional embodiments, before dividing the data in the to-be-processed data set into the plurality of clusters by using the clustering algorithm in step S121, a standardization processing can also be performed on the data in the to-be-processed data set to obtain standardized data.

By performing standardization processing on the data, the accuracy of data processing using the fuzzy C-means clustering algorithm can be improved. In this embodiment, the standardization processing is performed on the data using the following formula (9):

$$Data = \frac{data - np.\min(data)}{np.\max(data) - np.\min(data)} \qquad (9);$$

where data represents original data of SCADA data, np.min(data) represents a minimum value of a same type of data in the SCADA data, and np.max(data) represents a maximum value of the same type of data in the SCADA data. In step S121, dividing the data in the to-be-processed data set into the plurality of clusters by using the clustering algorithm includes dividing the standardized data into the plurality of clusters by using the clustering algorithm. Optionally, the standardization processing such as normalization can be performed on the data in the to-be-processed data set to obtain standardized data.

Further, the fuzzy C-means clustering algorithm is used to process the standardized data. Specifically, the SCADA data is classified by using the fuzzy C-means clustering algorithm, and then the data filtering is performed on the classified data; after removing one or more singular values singular values in each cluster and other data in the data group including the singular values, reverse standardization processing is performed on the standardized data obtained after removing the singular values singular values in each cluster and other data in the data group including the singular values. It can be understood that the standardized data processed by using the fuzzy C-means clustering algorithm will be restored to initial format data, so as to be convenient for subsequent statistics, analysis and evaluation of the data.

In some optional embodiments, in step S11, obtaining at least part of the data in the SCADA data set as the to-be-processed data set includes obtaining at least part of data with a set time dimension in the SCADA data set as the to-be-processed data set. The SCADA data can be divided into 10min data and 30s data, wherein the 10min data is the average of a plurality of 30s data. Considering the slow-changing characteristics of data monitored by the SCADA system due to factors such as a variation of wind speed and a variable speed of a wind turbine, the fluctuation of the 30s data is relatively large. Alternatively, in the present disclosure, the 10min data can be selected, that is, the time dimension can be set to 10min, so as to reduce the fluctuation of the data caused by the variable speed of the wind turbine, thereby reducing the influence on data analysis and processing. In addition, in the present disclosure, since there are many kinds of SCADA data, all kinds of data can be obtained for data processing, and some kinds of data can also be obtained for data processing, for example, several kinds of data (for example, wind speed, temperature, power) that have relatively great influence on the wind turbine.

In some optional embodiments, the data filtering steps can further include: removing data with one or more default values and other data in the data group including the data with the default values in the to-be-processed data set. Hereinafter, the data filtering step can be referred to as a NA removing step, where NA represents the default values. By obtaining the internal environmental temperature data, the external environmental temperature data and the component temperature data from the filtered data set obtained after the data filtering steps, abnormal temperature data and bad temperature data in the SCADA data can be removed, thereby improving the quality of the collected temperature data and the accuracy of the test and analysis.

In the actual operation of the wind turbine, the communication signal at the geographic position where the wind turbine is located may be relatively poor, the signal interruption often occurs, therefore, the data when the signal is interrupted can be recorded in the SCADA system as the default values. The purpose of the data filtering step is to remove the data with the default values and other data at the same moment in the data group including the data with the default values in the to-be-processed data set, therefore, the fluctuation of the SCADA data can be reduced, and the quality of the SCADA data and the accuracy of data analysis can be improved.

In some optional embodiments, the to-be-processed data set includes power data representing the output power of the wind turbine generator system, and the data filtering steps can further include removing power data representing negative output power and other data in the data group including the power data in the to-be-processed data set. Hereinafter, the data filtering steps can be referred to as a negative number removing step. By obtaining the internal environmental temperature data, the external environmental temperature data and the component temperature data from the filtered data set obtained after the data filtering steps, abnormal temperature data and bad temperature data in the SCADA data can be removed, thereby improving the quality of the collected temperature data and the accuracy of the test and analysis.

It can be understood that, a cut-in wind speed of the wind turbine is for a grid-connected wind turbine, which refers to a wind speed at which the wind turbine meets a grid-connected condition, that is, a minimum wind speed that can generate electricity, and if the wind speed is lower than the minimum wind speed, the wind turbine will automatically stop. A cut-out wind speed of the wind turbine refers to a maximum wind speed of the wind turbine connected to a grid for power generation, and if the wind speed exceeds the maximum wind speed, the wind turbine will cut out of the grid, that is, the wind turbine will shut down and stop generating electricity. When the wind turbine reaches the cut-in wind speed, a generator of the wind turbine can generate electricity continuously and stably.

In the actual operation of the wind turbine, due to factors such as wind turbine maintenance, shutdown or low wind speed, when the wind turbine does not reach the cut-out wind speed, power values corresponding to the SCADA data recorded in the SCADA system are negative, which are not conducive to subsequent data analysis. The purpose of the data filtering step is to remove the power data representing the negative output power and other data at the same moment in the data group including the power data in the to-be-processed data set, therefore, the fluctuation of the SCADA data can be reduced, and the quality of the SCADA data and the accuracy of data analysis can be improved.

In some optional embodiments, the data filtering steps can further include: removing data exceeding an alarm value and other data in the data group including the data exceeding the alarm value. Hereinafter, the data filtering step can be referred to as an out-of-tolerance removing step. By obtaining the internal environmental temperature data, the external environmental temperature data and the component temperature data from the filtered data set obtained after the data filtering steps, abnormal temperature data and bad temperature data in the SCADA data can be removed, thereby improving the quality of the collected temperature data and the accuracy of the test and analysis.

In the actual operation of the wind turbine, an alarm value can be set at each corresponding SCADA data point. When the monitored data exceeds the alarm value, it means that data is this time period is out-of-tolerance data, which is not a normal state of the wind turbine, and is not conducive to subsequent data analysis. For example, an alarm value the bearing temperature is 60°, when the monitored actual bearing temperature is higher than 60°, it is determined that the wind turbine is in an abnormal state, and an alarm is given. The purpose of the data filtering step is to remove the data exceeding the alarm value and other data at the same moment in the data group including the data exceeding the alarm value, therefore, the fluctuation of the SCADA data can be reduced, and the quality of the SCADA data and the accuracy of data analysis can be improved.

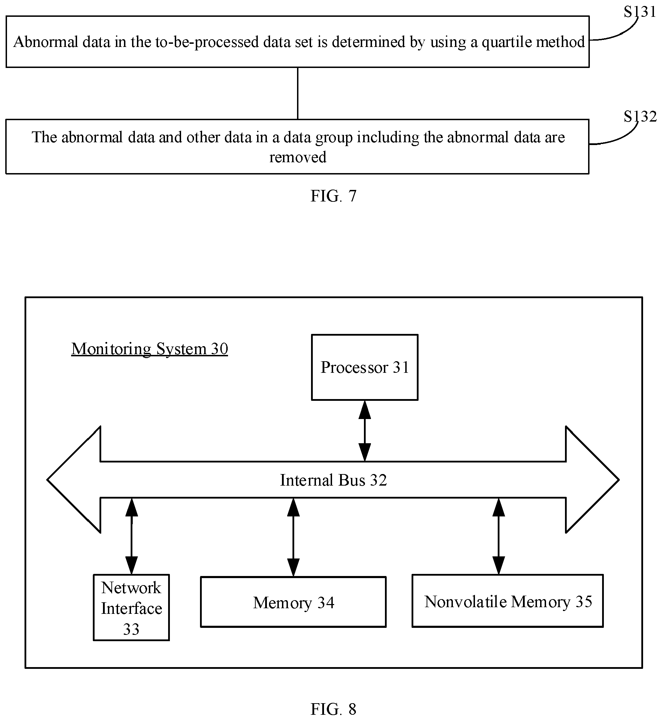

As shown in FIG. 7, in some optional embodiments, the data filtering steps can further include a quartile filtering step, and the quartile filtering step includes the following steps S131-S132.

Step S131, abnormal data in the to-be-processed data set is determined by using a quartile method. The quartiles, also referred to as quartile points, refer to values at positions of three dividing points when all values are arranged in ascending order and divided into four equal parts in statistics. A first quartile $Q1$ is the 25th percentile, a second quartile $Q2$ is the 50th percentile, and a third quartile $Q3$ is the 75th percentile. The trend of data variables can be compared and analyzed by combining $Q1$ and $Q3$.

Step S132, the abnormal data and other data in a data group including the abnormal data are removed. By using the quartile method to determine the abnormal data in the to-be-processed data set, the accuracy of data analysis can be improved. Hereinafter, the data filtering steps can be referred to as a quartile filtering step. By obtaining the internal environmental temperature data, the external environmental temperature data and the component temperature data from the filtered data set obtained after the data filtering steps, abnormal temperature data and bad temperature data in the SCADA data can be removed, thereby improving the quality of the collected temperature data and the accuracy of the test and analysis.

In some optional embodiments, after performing the data filtering on the to-be-processed data set, in response to that data in the processed data set is discontinuous in time series, data is backfilled for one or more missing moments between discontinuous data in the time series. It can be understood that, after performing data filtering on the to-be-processed data set through one or more data filtering steps, at least most abnormal data and bad data can be filtered and removed, and data with relatively high quality can be left. However, remaining data may not be continuous in the time series. The purpose of this step is to pad data to obtain continuous data in time series, so as to be convenient for the subsequent statistics, analysis and evaluation of the data.

In this embodiment, taking the time of the first SCADA data in the processed data set as a benchmark, it is determined whether the subsequent SCADA data is continuous. Taking a continuous interval of 10min as an example, if a time of the first SCADA data is 2020-01-01-14:00:00, and a time of a second SCADA data is 2020-01-01-14:10:00, it is determined that this data is continuous in time series; and if the time of the second SCADA data is 2020-01-01-14:20:00, that is, more than 10min, it is determined that this data is discontinuous in time series.

After determining the discontinuous data in the time series, backfilling data for one or more missing moments between discontinuous data in the time series can include the following two situations.

In response to that a number of continuous data blocks before the discontinuous data in the time series is greater than 2, a residual mean and a variance of the continuous data blocks before the discontinuous data in the time series are determined; and a random number is generated based on the residual mean and the variance for the data at the missing moments.

In response to that a number of continuous data blocks before the discontinuous data in the time series is less than or equal to 2, data corresponding to a moment before the discontinuous data in the time series is selected as the data for the missing moments. For example, data with a time of 2020-01-01-14:20:00 is determined to be discontinuous, and only one data with a time of 2020-01-01-14:00:00 is determined to be continuous before the data, therefore, the data with the time of 2020-01-01-14:00:00 is selected as data at the missing moment.

According to the method for processing data of the present disclosure, after performing data filtering on the to-be-processed data set through one or more data filtering steps, at least most abnormal data and bad data can be filtered and removed, and data with relatively high quality can be left, therefore, the fluctuation of the SCADA data can be reduced, thereby improving the quality of the SCADA data. By obtaining the internal environmental temperature data, the external environmental temperature data and the component temperature data from the filtered data set obtained after the data filtering steps, abnormal temperature data and bad temperature data in the SCADA data can be removed, thereby improving the quality of the collected temperature data and the accuracy of the test and analysis. It should be noted that, when the method for processing data includes a plurality of data filtering steps, the plurality of data filtering steps can be used to process the to-be-processed data set separately to obtain a filtered data set corresponding to each of the plurality of data filtering steps; and then the data in all the filtered data sets is combined to obtain the processed data. Alternatively, the plurality of data filtering steps can be used to sequentially process the to-be-processed data set to obtain the processed data.

As shown in FIG. 8, the embodiment of the present disclosure further provides a monitoring system 30 applied to a wind turbine generator system, including one or more processors 31 for implementing the method for monitoring the wind turbine generator system described in any one of the above embodiments.

The embodiment of the monitoring system 30 can be applied to the wind turbine generator system. The embodiment of the device can be realized by software, or by hardware or a combination of hardware and software. Taking the software implementation as an example, as a logical device, it is formed by the processor 31 of the wind turbine generator system where it is located reading the corresponding computer program instructions in the non-volatile memory into the memory for operation. From the aspect of hardware, as shown in FIG. 8, it is a hardware structure diagram of the wind turbine generator system where the monitoring system 30 of the present disclosure is located. Besides the processor 31, the internal bus 32, the memory 34, the network interface 33 and the nonvolatile memory 35 shown in FIG. 8, the wind turbine generator system where the device is located in the embodiment can usually include other hardware according to the actual functions of the wind turbine generator system, which will not be described again.

The processor 31 can be a central processing unit (CPU), other general-purpose processors, a digital signal processor (DSP), an application specific integrated circuit (ASIC), a field-programmable gate array (FPGA), or other programmable logic devices, a discrete gate or a transistor logic device, a discrete hardware component, or the like. The general-purpose processor can be a microprocessor, or the processor 31 can be any conventional processor, or the like.

The embodiment of the present disclosure further provides a computer readable storage medium storing programs thereon, where when the programs are executed by one or more processors 31, the method for monitoring the wind turbine generator system described in any one of the above embodiments is implemented.

The computer readable storage medium can be an internal storage unit of the wind turbine generator system described in any one of the foregoing embodiments, for example, a hard disk or a memory. Alternatively, the computer readable storage medium can be an external storage device of the wind turbine, for example, a plug-in hard disk, a smart media card (SMC), a secure digital (SD) card, a flash card, or the like that is configured on the device. Further, the computer readable storage medium can include both an internal storage unit and an external storage device of the wind turbine generator system. The computer readable storage medium is configured to store the computer program and other programs and data that are required by the wind turbine generator system. The computer readable storage medium can be further configured to temporarily store data that has been output or is to be output.

The above are only preferred examples of the present disclosure, and are not intended to limit the present disclosure. Any modification, equivalent replacement, or improvement made within the scope of the appended claims of the present disclosure shall be included in the protection scope of the present disclosure.

# EP 4 184 007 B1

**Claims**

1.  A method for monitoring a wind turbine generator system, **characterized in that** the method comprises:

    obtaining (S101) internal environmental temperature data, external environmental temperature data and component temperature data of the wind turbine generator system;
    determining (S102) one or more first statistics according to a difference between the component temperature data and the internal environmental temperature data, and determining one or more second statistics according to a difference between the component temperature data and the external environmental temperature data; and
    determining (S103) whether the component temperature data meets a set requirement according to the first statistics and the second statistics.

2.  The method according to claim 1, wherein determining (S103) whether the component temperature data meets the set requirement according to the first statistics and the second statistics further comprises:

    performing (S1031) a test and analysis on the first statistics and the second statistics by using a multivariate test method to determine one or more test values between the first statistics and the second statistics and an upper limit value of the test values, wherein the multivariate test method comprises a Hotelling's T-squared distribution test method; and
    monitoring (S1032) whether the test values exceed the upper limit value to determine whether the component temperature data meets the set requirement.

3.  The method according to claim 2, wherein obtaining (S101) the internal environmental temperature data, the external environmental temperature data and the component temperature data of the wind turbine generator system comprises:

    obtaining a set number of the internal environmental temperature data, the external environmental temperature data and the component temperature data; and
    wherein performing (S1031) the test and analysis on the first statistics and the second statistics by using the multivariate test method to determine one or more test value between the first statistics and the second statistics and the upper limit value of the test values further comprises:

    determining (S10311) the test values between the first statistics and the second statistics according to the first statistics, the second statistics, an average value of the set number of the first statistics and an average value of the set number of the second statistics; and
    determining (S10312) the upper limit value by using a chi-square distribution method according to the set number and a number of statistics determined from the internal environmental temperature data, the external environmental temperature data and the component temperature data and the set number.

4.  The method according to claim 2, wherein monitoring (S1032) whether the test values exceed the upper limit value to determine whether the component temperature data meets the set requirement further comprises at least one of the following steps:

    in response to continuously monitoring that a first set number of the test values are greater than the upper limit value, determining that the component temperature data does not meet the set requirement;
    in response to continuously monitoring that a second set number of the test values are less than or equal to the upper limit value, determining that the component temperature data meets the set requirement.

5.  The method according to claim 1, wherein a supervisory control and data acquisition (SCADA) data set of the wind turbine generator system is collected by a SCADA system, and obtaining (S101) the internal environmental temperature data, the external environmental temperature data and the component temperature data of the wind turbine generator system comprises:

    obtaining (S11) at least part of data with a set time dimension in the SCADA data set as a to-be-processed data set, wherein the to-be-processed data set comprises a plurality of data groups, and each of the plurality of data groups comprises a plurality of data types representing different information at a same moment, and the plurality of data types comprise to-be-processed internal environmental temperature data, to-be-processed external environmental temperature data and to-be-processed component temperature data;

13

performing (S12) a data filtering on the to-be-processed data set through one or more data filtering steps to obtain a filtered data set, wherein the filtered data set comprises the internal environmental temperature data, the external environmental temperature data and the component temperature data; and obtaining the internal environmental temperature data, the external environmental temperature data and the component temperature data from the filtered data set.

6. The method according to claim 5, wherein the data filtering steps comprise:

dividing (S121) data in the to-be-processed data set into a plurality of clusters by using a clustering algorithm, wherein the clustering algorithm comprises a fuzzy C-means clustering algorithm; and
removing (S122) one or more singular values in each of the plurality of clusters and other data in a data group comprising the singular values.

7. The method according to claim 6, wherein removing (S122) one or more singular values in each of the plurality of clusters and other data in the data group comprising the singular values comprises:

determining (S1221) a center of the cluster by using the fuzzy C-means clustering algorithm;
determining (S1222) respective Euclidean distances between data in one or more of the clusters with centers of corresponding clusters; and
removing (S1223) one or more distance outliers from the Euclidean distances of the clusters based on Pauta criterion, and removing one or more singular values corresponding to the distance outliers.

8. The method according to claim 5, wherein the data filtering steps comprise:

determining (S131) abnormal data in the to-be-processed data set by using a quartile method; and
removing (S132) the abnormal data and other data in a data group comprising the abnormal data.

9. The method according to claim 6, wherein before dividing (S121) the data in the to-be-processed data set into the plurality of clusters by using the clustering algorithm, the method further comprises:

performing standardization processing on the data in the to-be-processed data set to obtain standardized data; and
wherein dividing (S121) the data in the to-be-processed data set into the plurality of clusters by using the clustering algorithm comprises:

dividing the standardized data into the plurality of clusters by using the clustering algorithm;
wherein after removing (S1223) one or more singular values in each of the plurality of clusters and other data in the data group comprising the singular values, the method further comprises:
performing reverse standardization processing on the standardized data obtained after removing one or more singular values in the cluster and other data in the data group comprising the singular values.

10. The method according to claim 6, wherein dividing (S121) the data in the to-be-processed data set into the plurality of clusters by using the clustering algorithm comprises:
dividing each type of the data in the to-be-processed data set into a plurality of clusters respectively by using the clustering algorithm.

11. The method according to claim 5, wherein after performing (S12) the data filtering on the to-be-processed data set, the method further comprises:
in response to that data in the filtered data set is discontinuous in time series, backfilling data for one or more missing moments between discontinuous data in the time series.

12. The method according to claim 11, wherein backfilling the data for one or more missing moments between discontinuous data in the time series comprises:

in response to that a number of continuous data blocks before the discontinuous data in the time series is greater than 2, determining a residual mean and a variance of the continuous data blocks before the discontinuous data in the time series; and
generating a random number based on the residual mean and the variance as the data for the missing moments.

13. The method according to claim 11, wherein backfilling the data for one or more missing moments between discontinuous data in the time series comprises:
in response to that a number of continuous data blocks before the discontinuous data in the time series is less than or equal to 2, selecting data corresponding to a moment before the discontinuous data in the time series as the data for the missing moments.

14. A monitoring system (30) being applicable to a wind turbine generator system, **characterized in that**, the monitoring system (30) comprises one or more processors (31) for implementing the method for monitoring the wind turbine generator system according to any one of claims 1 to 13.

15. A computer readable storage medium storing a computer program thereon, **characterized in that**, when the computer program is executed by one or more processors (31), the method for monitoring the wind turbine generator system according to any one of claims 1 to 13 is implemented.


**Patentansprüche**

1. Überwachungsverfahren für eine Windkraftanlage umfassend:

Erhalten von internen Umgebungstemperaturdaten und externen Umgebungstemperaturdaten der Windkraftanlage sowie von Temperaturdaten einer Komponente der Windkraftanlage;
Bestimmen einer ersten statistischen Größe basierend auf der Differenz zwischen den Temperaturdaten der Komponente und den internen Umgebungstemperaturdaten, Bestimmen einer zweiten statistischen Größe basierend auf der Differenz zwischen den Temperaturdaten der Komponente und den externen Umgebungstemperaturdaten, wobei das multivariate Testverfahren ein Hotelling-T-Quadrat-Verteilungstestverfahren umfasst;
Beurteilen, ob die Temperaturdaten der Komponente die vorgegebenen Anforderungen erfüllen, basierend auf der ersten statistischen Größe und der zweiten statistischen Größe.

2. Verfahren nach Anspruch 1, **dadurch gekennzeichnet, dass** das Beurteilen, ob die Temperaturdaten der Komponente die vorgegebenen Anforderungen erfüllen, basierend auf der ersten statistischen Größe und der zweiten statistischen Größe ferner Folgendes umfasst:

Testen und Analysieren der ersten statistischen Größe und der zweiten statistischen Größe unter Verwendung eines multivariaten Testverfahrens, Bestimmen eines Testwerts zwischen der ersten statistischen Größe und der zweiten statistischen Größe und eines oberen Grenzwerts des Testwerts;
Überwachen, ob der Testwert den oberen Grenzwert überschreitet, um zu beurteilen, ob die Temperaturdaten der Komponente die vorgegebenen Anforderungen erfüllen.

3. Verfahren nach Anspruch 2, **dadurch gekennzeichnet, dass** das Erhalten von internen Umgebungstemperaturdaten und externen Umgebungstemperaturdaten der Windkraftanlage sowie von Temperaturdaten der Komponente der Windkraftanlage Folgendes umfasst:

Erhalten einer vorgegebenen Anzahl von internen Umgebungstemperaturdaten, externen Umgebungstemperaturdaten und Temperaturdaten der Komponente;
das Testen und Analysieren der ersten statistischen Größe und der zweiten statistischen Größe unter Verwendung des multivariaten Testverfahrens, Bestimmen eines Testwerts zwischen der ersten statistischen Größe und der zweiten statistischen Größe und eines oberen Grenzwerts des Testwerts ferner Folgendes umfassen:

Bestimmen eines Testwerts zwischen der ersten statistischen Größe und der zweiten statistischen Größe basierend auf der ersten statistischen Größe, der zweiten statistischen Größe, dem Mittelwert der vorgegebenen Anzahl der ersten statistischen Größen und dem Mittelwert der vorgegebenen Anzahl der zweiten statistischen Größen;
Bestimmen des oberen Grenzwerts basierend auf der Anzahl der statistischen Größen, die durch die internen Umgebungstemperaturdaten, die externen Umgebungstemperaturdaten und die Temperaturdaten der Komponente bestimmt werden, und der vorgegebenen Anzahl unter Verwendung der Chi-Quadrat-Verteilung.

**4.** Verfahren nach Anspruch 2, **dadurch gekennzeichnet, dass** das Überwachen, ob der Testwert den oberen Grenzwert überschreitet, um zu beurteilen, ob die Temperaturdaten der Komponente die vorgegebenen Anforderungen erfüllen, ferner mindestens eines der Folgenden umfasst:

Bestimmen, dass die Temperaturdaten der Komponente die vorgegebenen Anforderungen nicht erfüllen, wenn eine erste vorgegebene Anzahl von Testwerten kontinuierlich überwacht wird, die jeweils den oberen Grenzwert überschreiten;
Bestimmen, dass die Temperaturdaten der Komponente die vorgegebenen Anforderungen erfüllen, wenn eine zweite vorgegebene Anzahl von Testwerten kontinuierlich überwacht wird, die jeweils den oberen Grenzwert nicht überschreiten.

**5.** Verfahren nach Anspruch 1, **dadurch gekennzeichnet, dass** der SCADA-Datensatz der Windkraftanlage durch ein SCADA-System erfasst wird, und das Erhalten von internen Umgebungstemperaturdaten und externen Umgebungstemperaturdaten der Windkraftanlage sowie von Temperaturdaten der Komponente der Windkraftanlage Folgendes umfasst:

Erhalten mindestens eines Teils der Daten in dem SCADA-Datensatz in einer vorgegebenen Zeitdimension als einen zu verarbeitenden Datensatz, wobei der zu verarbeitende Datensatz eine Vielzahl von Datenreihen umfasst, jede Datenreihe verschiedene Daten umfasst, die unterschiedliche Informationen zum gleichen Zeitpunkt charakterisieren, wobei die verschiedenen Daten zu verarbeitende interne Umgebungstemperaturdaten, zu verarbeitende externe Umgebungstemperaturdaten und zu verarbeitende Temperaturdaten der Komponente umfassen;
Durchführen eines Datenscreenings an dem zu verarbeitenden Datensatz durch mindestens einen Datenscreening-Schritt, um einen gescreenten Datensatz zu erhalten, wobei der gescreente Datensatz die internen Umgebungstemperaturdaten, die externen Umgebungstemperaturdaten und die Temperaturdaten der Komponente umfasst; wobei die internen Umgebungstemperaturdaten, die externen Umgebungstemperaturdaten und die Temperaturdaten der Komponente aus dem gescreenten Datensatz erhalten werden.

**6.** Verfahren nach Anspruch 5, **dadurch gekennzeichnet, dass** der Datenscreening-Schritt Folgendes umfasst:

Unterteilen der Daten im zu verarbeitenden Datensatz in mehrere Cluster unter Verwendung des Clustering-Algorithmus, wobei der Clustering-Algorithmus den Fuzzy-C-Mittelwert-Clustering-Algorithmus umfasst; und
Entfernen des singulären Werts in jedem Cluster und anderer Daten der Datenreihe, die den singulären Wert umfassen.

**7.** Verfahren nach Anspruch 6, **dadurch gekennzeichnet, dass** das Entfernen des singulären Werts in jedem Cluster und anderer Daten der Datenreihe, die den singulären Wert umfassen, Folgendes umfasst:

Bestimmen des Zentrums jedes Clusters unter Verwendung des Fuzzy-C-Mittelwert-Clustering-Algorithmus;
Bestimmen des euklidischen Abstands zwischen den Daten in mindestens einem Cluster und dem entsprechenden Zentrum des Clusters; und
Entfernen von Abstandsausreißern unter den euklidischen Abständen in mindestens einem Cluster unter Verwendung eines Lajda-Kriteriums und Entfernen der den Abstandsausreißern entsprechenden singulären Werte.

**8.** Verfahren nach Anspruch 5, **dadurch gekennzeichnet, dass** der Datenscreening-Schritt Folgendes umfasst:

Bestimmen von anomalen Daten im zu verarbeitenden Datensatz unter Verwendung eines Quartilsverfahrens;
Entfernen der anomalen Daten und anderer Daten der Datenreihe, die die anomalen Daten umfassen.

**9.** Verfahren nach Anspruch 6, **dadurch gekennzeichnet, dass** vor dem Unterteilen der Daten im zu verarbeitenden Datensatz in mehrere Cluster unter Verwendung des Clustering-Algorithmus das Verfahren ferner Folgendes umfasst:

Standardisieren der Daten im zu verarbeitenden Datensatz, um standardisierte Daten zu erhalten;
Unterteilen der Daten im zu verarbeitenden Datensatz in mehrere Cluster unter Verwendung des Clustering-Algorithmus Folgendes umfasst:

Unterteilen der standardisierten Daten in mehrere Cluster unter Verwendung des Clustering-Algorithmus;
nach dem Entfernen des singulären Werts in jedem Cluster und anderer Daten der Datenreihe, die den singulären Wert umfassen, das Verfahren ferner Folgendes umfasst:
Durchführen einer inversen Standardisierung der standardisierten Daten nach dem Entfernen des singulären Werts in jedem Cluster sowie anderer Daten der Datenreihe, die den singulären Wert umfassen.

10. Verfahren nach Anspruch 6, **dadurch gekennzeichnet, dass** das Unterteilen der Daten im zu verarbeitenden Datensatz in mehrere Cluster unter Verwendung des Clustering-Algorithmus Folgendes umfasst:
Unterteilen jeder Art von Daten im zu verarbeitenden Datensatz jeweils in mehrere Cluster unter Verwendung des Clustering-Algorithmus.

11. Verfahren nach Anspruch 5, **dadurch gekennzeichnet, dass** nach der Durchführung des Datenscreenings an dem zu verarbeitenden Datensatz das Verfahren ferner Folgendes umfasst:
nachträgliches Ergänzen der Daten für die fehlenden Zeitpunkte zwischen den Daten mit der nicht kontinuierlichen Zeitreihe, wenn die Zeitreihe der Daten im gescreenten Datensatz nicht kontinuierlich ist.

12. Verfahren nach Anspruch 11, **dadurch gekennzeichnet, dass** das nachträgliche Ergänzen der Daten für die fehlenden Zeitpunkte zwischen den Daten mit der nicht kontinuierlichen Zeitreihe Folgendes umfasst:
Bestimmen eines Residualmittelwerts und einer Residualvarianz der kontinuierlichen mehreren Daten vor den Daten mit der nicht kontinuierlichen Zeitreihe, wenn die Anzahl der kontinuierlichen mehreren Daten vor den Daten mit der nicht kontinuierlichen Zeitreihe größer als 2 ist, und Generieren einer Zufallszahl auf der Grundlage des Residualmittelwerts und der Residualvarianz als Daten für die fehlenden Zeitpunkte.

13. Verfahren nach Anspruch 11, **dadurch gekennzeichnet, dass** das nachträgliche Ergänzen der Daten für die fehlenden Zeitpunkte zwischen den Daten mit der nicht kontinuierlichen Zeitreihe Folgendes umfasst:
Auswählen der Daten, die dem Zeitpunkt vor den Daten mit der nicht kontinuierlichen Zeitreihe entsprechen, als Daten für die fehlenden Zeitpunkte, wenn die Anzahl der kontinuierlichen mehreren Daten vor den Daten mit der nicht kontinuierlichen Zeitreihe nicht größer als 2 ist.

14. Überwachungssystem, das auf eine Windkraftanlage angewendet wird, wobei das Überwachungssystem einen oder mehrere Prozessoren umfasst, die das Überwachungsverfahren gemäß einem der Ansprüche 1-13 implementieren.

15. computerlesbares Speichermedium, auf dem ein Programm gespeichert ist, das, wenn es von einem Prozessor ausgeführt wird, das Überwachungsverfahren gemäß einem der Ansprüche 1-13 implementiert.

**Revendications**

1. Un procédé de surveillance d'un groupe électrogène éolien, **caractérisé en ce que** le procédé comprend :

   Obtenir les données de température de l'environnement intérieur et les données de température de l'environnement extérieur dudit groupe électrogène éolien, ainsi que lesdites données de température des composants dudit groupe électrogène éolien ;
   Déterminer une première statistique en fonction de la différence entre lesdites données de température des composants et lesdites données de température de l'environnement intérieur, et déterminer une deuxième statistique en fonction de la différence entre lesdites données de température des composants et lesdites données de température de l'environnement extérieur, ledit procédé d'essai multivarié comprenant le procédé d'inspection de la distribution T - carré de Hotelling ;
   Selon ladite première statistique et ladite deuxième statistique, déterminer si lesdites données de température des composants satisfont aux exigences définies.

2. Le procédé selon la revendication 1, **caractérisé en ce que** le fait de déterminer, en fonction de ladite première statistique et de ladite deuxième statistique, si lesdites données de température des composants satisfont aux exigences définies comprend en outre :

   Utiliser un procédé d'essai multivarié pour effectuer une analyse d'essai sur ladite première statistique et ladite deuxième statistique, et déterminer la valeur d'essai entre ladite première statistique et ladite deuxième statistique ainsi que la valeur limite supérieure de ladite valeur d'essai ;

Surveiller si ladite valeur d'essai dépasse la valeur limite supérieure afin de déterminer si lesdites données de température des composants satisfont aux exigences définies.

3. Le procédé selon la revendication 2, **caractérisé en ce que** l'obtention des données de température de l'environnement interne, des données de température de l'environnement externe et des données de température des composants dudit groupe électrogène éolien comprend :

Obtenir un nombre défini desdites données de température de l'environnement interne, desdites données de température de l'environnement externe et desdites données de température des composants ;
Utiliser un procédé d'essai multivarié pour effectuer une analyse d'essai sur ladite première statistique et ladite deuxième statistique, et déterminer la valeur d'essai entre ladite première statistique et ladite deuxième statistique ainsi que la valeur limite supérieure de ladite valeur d'essai, comprend en outre :

Déterminer la valeur d'essai entre ladite première statistique et ladite deuxième statistique en fonction de ladite première statistique, de ladite deuxième statistique, de la moyenne d'un nombre défini de ladite première statistique et de la moyenne d'un nombre défini de ladite deuxième statistique ;
Déterminer la valeur limite supérieure par une distribution du chi-carré en fonction dudit nombre de statistiques déterminées par lesdites données de température de l'environnement interne, lesdites données de température de l'environnement externe et lesdites données de température des composants, ainsi que dudit nombre défini.

4. Le procédé selon la revendication 2, **caractérisé en ce que** le fait de surveiller si ladite valeur d'essai dépasse ladite valeur limite supérieure pour déterminer si lesdites données de température des composants satisfont aux exigences définies comprend en outre au moins l'un des éléments suivants :

En réponse à la détection continue selon laquelle un premier nombre défini de ladite valeur d'essai est supérieur à ladite valeur limite supérieure, déterminer que lesdites données de température des composants ne satisfont pas à l'exigence définie ;
En réponse à la détection continue selon laquelle un deuxième nombre défini de ladite valeur d'essai est inférieur ou égal à ladite valeur limite supérieure, déterminer que lesdites données de température des composants satisfont à l'exigence définie.

5. Le procédé selon la revendication 1, **caractérisé en ce que** l'on collecte le jeu de données SCADA dudit groupe électrogène éolien par le système SCADA, et le fait d'obtenir les données de température de l'environnement interne, les données de température de l'environnement externe dudit groupe électrogène éolien, et les données de température des composants dudit groupe électrogène éolien comprend :

Obtenir au moins une partie des données dans une dimension temporelle définie dudit jeu de données SCADA, en tant que jeu de données à traiter, ledit jeu de données à traiter comprenant plusieurs groupes de données, chaque groupe de données comprenant plusieurs types de données représentant différentes informations à un même instant, lesdits types de données comprenant des données de température de l'environnement interne à traiter, des données de température de l'environnement externe à traiter et des données de température des composants à traiter ;
En passant par au moins une étape de filtrage de données pour effectuer un traitement de filtrage de données sur ledit jeu de données à traiter, obtenir un jeu de données filtré, ledit jeu de données filtré comprenant lesdites données de température de l'environnement interne, lesdites données de température de l'environnement externe et lesdites données de température des composants ; obtenir lesdites données de température de l'environnement interne, lesdites données de température de l'environnement externe et lesdites données de température des composants à partir dudit jeu de données filtré.

6. Le procédé selon la revendication 5, **caractérisé en ce que** l'étape de filtrage desdites données comprend :

Utiliser un algorithme de clustering pour diviser lesdites données du jeu de données à traiter en plusieurs clusters, où ledit algorithme de clustering comprend l'algorithme de clustering moyen flou C ; et
supprimer les valeurs aberrantes dans chacun ledits clusters et les autres données du groupe de données comprenant de cette valeur aberrante.

7. Le procédé selon la revendication 6, **caractérisé en ce que** le fait de supprimer les valeurs aberrantes dans chacun desdits clusters et les autres données du groupe de données comprenant ladite valeur aberrante comprend :

Utiliser l'algorithme de clustering moyen flou C pour déterminer le centre de chacun desdits clusters ;
Déterminer la distance euclidienne des données d'au moins un desdits clusters par rapport au centre dudit cluster correspondant ; et
Utiliser le critère de Pauta pour supprimer les valeurs aberrantes de ladite distance euclidienne dans au moins un desdits clusters, et supprimer ladite valeur aberrante correspondante aux lesdits valeurs aberrantes.

8. Le procédé selon la revendication 5, **caractérisé en ce que** l'étape de filtrage desdites données comprend :

Utiliser la méthode des quartiles pour déterminer lesdites données aberrantes dans le jeu de données à traiter ;
Supprimer lesdites données aberrantes et les autres données du groupe de données comprenant lesdites données aberrantes.

9. Le procédé selon la revendication 6, **caractérisé en ce que**, avant d'utiliser l'algorithme de clustering pour diviser lesdites données du jeu de données à traiter en plusieurs clusters, le procédé comprend également :

Effectuer un traitement de normalisation sur lesdites données du jeu de données à traiter pour obtenir des données normalisées ;
Le fait d'utiliser l'algorithme de clustering pour diviser lesdites données du jeu de données à traiter en plusieurs clusters comprend :

Utiliser l'algorithme de clustering pour diviser lesdites données normalisées en plusieurs clusters ;
Après le fait de supprimer les valeurs aberrantes dans chacun desdits clusters et les autres données du groupe de données comprenant ladite valeur aberrante, le procédé comprend également :
Effectuer un traitement de dénormalisation sur lesdites données normalisées après avoir supprimé les valeurs aberrantes dans chacun desdits clusters et les autres données du groupe de données comprenant ladite valeur aberrante.

10. Le procédé selon la revendication 6, **caractérisé en ce que** le fait d'utiliser ledit algorithme de clustering pour diviser lesdites données du jeu de données à traiter en plusieurs clusters comprend :
Utiliser l'algorithme de clustering pour diviser chacune desdites données du jeu de données à traiter en plusieurs clusters séparément.

11. Le procédé selon la revendication 5, **caractérisé en ce que**, après avoir effectué le traitement de filtrage de données sur ledit jeu de données à traiter, le procédé comprend également :
Si la séquence temporelle desdites données du jeu de données filtré n'est pas continue, remplir par retour arrière les données des moments manquants entre les données avec séquence temporelle non continue.

12. Le procédé selon la revendication 11, **caractérisé en ce que** le fait de remplir par retour arrière lesdites données des moments manquants entre lesdites données avec séquence temporelle non continue comprend :
Si le nombre de plusieurs données continues avant lesdites données avec séquence temporelle non continue est supérieur à 2, déterminer la moyenne et la variance des résidus desdites plusieurs données continues avant lesdites données avec séquence temporelle non continue, et générer un nombre aléatoire sur la basis de ladite moyenne et de ladite variance, en tant que données du moment manquant.

13. Le procédé selon la revendication 11, **caractérisé en ce que** le fait de remplir par retour arrière lesdites données des moments manquants entre lesdites données avec séquence temporelle non continue comprend :
Si le nombre de plusieurs données continues avant lesdites données avec séquence temporelle non continue n'est pas supérieur à 2, sélectionner lesdites données correspondant au moment avant lesdites données avec séquence temporelle non continue, en tant que données du moment manquant.

14. Un système de surveillance destiné à un groupe électrogène éolien, comprenant un ou plusieurs processeurs, utilisés pour mettre en œuvre le procédé de surveillance ledit tel que décrit dans l'une quelconque des revendications 1 à 13.

15. Un support de stockage lisible par ordinateur, sur lequel un programme est stocké, et lorsque ce programme est exécuté par un processeur, il met en œuvre le procédé de surveillance ledit tel que décrit dans l'une quelconque des revendications 1 à 13.

Acquire internal environment temperature data and external environment temperature data of a wind turbine generator set, and component temperature data of the wind turbine generator set

S101

Determine a first statistics according to a difference value between the component temperature data and the internal environment temperature data, and determine a second statistics according to a difference value between the component temperature data and the external environment temperature data

S102

According to the first statistics and the second statistics, determine whether the component temperature data satisfies a set requirement

S103

FIG. 1

Test and analysis are performed on the first statistics and the second statistics by using a multivariate test method to determine one or more test values between the first statistics and the second statistics and an upper limit value of the test values

S1031

It is monitored whether the test values exceed the upper limit value to determine whether the component temperature data meets the set requirement

S1032

FIG. 2

The test values between the first statistics and the second statistics are determined according to the first statistics, the second statistics, an average value of the set number of the first statistics and an average value of the set number of the second statistics

S10311

The upper limit value is determined by using a chi-square distribution method according to a number of one or more statistics determined by the internal environmental temperature data, the external environmental temperature data and the component temperature data and the set number

S10312

FIG. 3

At least part of data in the SCADA data set is obtained as a to-be-processed data set, wherein the to-be-processed data set includes a plurality of data groups, and each of the plurality of data groups includes a plurality of data types representing different information at a same moment, and the plurality of data types include to-be-processed internal environmental temperature data, to-be-processed external environmental temperature data and to-be-processed component temperature data — S11

Data filtering is performed on the to-be-processed data set through one or more data filtering steps to obtain a filtered data set. The filtered data set includes the internal environmental temperature data, the external environmental temperature data and the component temperature data. The internal environmental temperature data, the external environmental temperature data and the component temperature data are obtained from the filtered data set — S12

FIG. 4

Data in the to-be-processed data set is divided into a plurality of clusters by using a clustering algorithm — S121

One or more singular values in each of the plurality of clusters and other data in a data group including the singular values are removed — S122

FIG. 5

Center of the cluster is determined by using the fuzzy C-means clustering algorithm — S1221

Respective Euclidean distances between data in one or more of the clusters with centers of corresponding clusters are determined — S1222

One or more distance outliers from the Euclidean distances of the clusters are removed based on Pauta criterion, and one or more singular values corresponding to the distance outliers are removed — S1223

FIG. 6

Abnormal data in the to-be-processed data set is determined by using a quartile method $\quad$ S131

The abnormal data and other data in a data group including the abnormal data are removed $\quad$ S132

FIG. 7

Monitoring System 30

Processor 31

Internal Bus 32

Network Interface 33

Memory 34

Nonvolatile Memory 35

FIG. 8

**EP 4 184 007 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2927662 B1
- US 2019145382 A1

23